# EUROPEAN PATENT APPLICATION

(11) **EP 3 006 790 A1**
(43) Date of publication of application: **13.04.2016**
(21) Application number: 15186473.3
(22) Date of filing: 23.09.2015
(51) Int. Cl.: F16K 1/04, F16K 11/20, F16K 27/00

(54) **VALVE UNIT**

(30) Priority: 29.09.2014 DK 201470601
(71) Applicant: Broen A/S, 5610 Assens (DK)
(72) Inventor: Lildholdt, Mads Lindegaard, 5683 Haarby (DK); Madsen, Peder, 5250 Odense SV (DK)
(74) Representative: Olesen, Birthe Bjerregaard

(57) **Abstract**

Valve unit for installation on a district heating pipeline and in a dry well, where the valve unit comprises a valve top with at least one main valve (7) and at least one by-pass valve (8), where at least one by-pass duct (10) is at least connected to a pipe on both sides of the main valve (7) via a pipe connection, and where the by-pass duct (10) is further connected to the at least one by-pass valve (8) where the by-pass duct (10) is an integrated part of the valve unit, thereby achieving a drain valve which are to be operated from outside the well by an operator on the ground.

## Description

### Field of the Invention

The present invention relates to a valve unit for installation on a district heating pipeline and in a dry well, where the valve unit comprises a valve top with at least one main valve and at least one by-pass valve, where at least one by-pass duct is at least connected to a pipe on both sides of the main valve via a pipe connection, and where the by-pass duct is further connected to the at least one by-pass valve.

The invention further relates to a method for operating a valve unit and a use of a valve unit.

### Background of the Invention

Before the development of the present invention, it was also known to have valve units in dry wells, but where additional installations had to be made on site to provide options like by-pass of water between two pipes on each side of a main valve and/or from one pipe on one side of a main valve to another pipe not connected to the same main valve or any combination hereof.

One of the disadvantages of such installations were that they neither were user friendly nor user easy to operate because it was necessary for the operator to have the upper part of the body down the dry well, keeping the lower part of the body on the ground. Besides being extreme inconvenient, the operators were also taking a serious risk of scalding in the case of leakage between the pipe fittings.

Another disadvantage of such installations were the use of a number of ball valves which were angled and thus either not capable of being operated from above the ground using a tool, or not capable of being used in the needed installation at all. The only way to install and - if possible - to operate was by hand of an operator having the upper part of the body down the dry well, keeping the lower part of the body on the ground.

### Object of the Invention

The object of this invention is therefore to provide a valve unit of the type mentioned in the introduction which is to be operated from outside the well by an operator on the ground and in a better way than the known prior-art technology. In any circumstances, it is an object of the invention to provide a valve unit for installation on a district heating pipeline and in a dry well where it is possible to by-pass water between two pipes on each side of a main valve and/or from one pipe on one side of a valve to another pipe not connected to the same main valve or any combination hereof, and without any additional installation since all options are integrated in the valve unit.

### Description of the Invention

According to a first aspect of the invention, the above object is achieved with a valve unit of the type mentioned in the introduction, where the by-pass duct is an integrated part of the valve unit.

This making it possible to by-pass water from one pipe on one side of a main valve to the same pipe on the other side of the main valve, and without any additional installation since all options are integrated in the valve unit.

Where more pipes are integrated in a pipeline, it is also possible to by-pass water between two pipes, from one pipe to the other, from one pipe on one side of the main valve to one side of another main valve or any combination hereof, and still without any additional installation since all options are integrated in the valve unit.

A valve unit comprising only one main valve and only one by-pass valve is obviously possible, for example with a pipeline comprising only one pipe, and thus having no use of any further by-pass ducts or any further main valves nor by-pass valves.

The integration of the by-pass duct within the valve unit makes it possible both to construct, design and produce a compact by-pass duct and a compact valve top which are far more compact than previously known valve tops.

The integrated valve unit is preferably welded by using materials within a group of metals and/or polymers. An alternative is to cast the valve unit in one unit or several units and later being welded or otherwise connected together.

When the valve top, and hence the valve unit, is more compact, less isolation is required around the pipe/s, pipeline and valve unit, and the isolation becomes better. If less isolation is used, it becomes an option to use dry wells with a smaller diametre.

Using a by-pass duct within an integrated valve unit saves time and thus also money in terms of no welding and installation on site. Not only becoming cheaper, the use of an integrated valve unit is also becoming more efficient. The safety issue and risk regarding scalding become none existing. Leakage between loose fittings and valves does not occur and operators having their upper part of the body down the dry well for operating the valves are no longer necessary, and thus the working environment becomes better.

Using a by-pass duct within an integrated valve unit further makes it possible to keep the by-pass duct at approximately the same level as the pipes, this making it possible to by-pass water or liquid the shortest possible distance.

In a second aspect, the present invention also relates to a valve unit, where the by-pass duct is an integrated part of the valve top.

Using a by-pass duct within an integrated valve top equally saves time and thus also money in terms of no welding and installation on site. However, by integrating the by-pass duct within the valve top makes the valve top even more compact in construction. An advantage with this embodiment is less distance to possible by-pass outlets and shorter pipe connections from the outlets to the by-pass duct.

In a third aspect, the present invention also relates to a valve unit, where the at least one by-pass duct at each pipe connection comprises a separate by-pass valve.

This makes it possible to by-pass water from one pipe on one side of a main valve to the same pipe on the other side of the main valve, and without any additional installation since all options are integrated in the valve unit.

When more pipes are integrated in a pipeline it is also possible to by-pass water between to pipes, from one pipe to the other, from one pipe on one side of a main valve to one side of another main valve or any combination hereof, and still without any additional installation since all options are integrated in the valve.

In one embodiment, all pipes on either side of the respective main valve/s are connected to each other by a by-pass duct, each pipe having its own by-pass valve.

In another embodiment, at least the by-pass valves are seat valves.

This makes it possible, in a first step, to lead water or liquid in the axial direction through a by-pass valve and, in another step, to lead the water in a radial direction out through the wall of a by-pass valve and into a by-pass duct or the other way around since at least two valves normally are used.

The by-pass valves are all possible to dismantle by screwing out the moveable parts of the valve which ideally is just a screw construction with a seat at one end and a head at the other end. This is due to the maintaining and servicing, like changing the O-rings, but also due to the drawing off by means of leading a hose down the by-pass valve house.

In a fourth aspect, the present invention also relates to a valve unit, where the centre axis of at least all by-pass valves are mainly parallel, the valve top of the valves being essentially in the same plane and pointing in the same direction.

This makes it possible to operate all the valves from the same position, where the top of the valve ideally is operated from outside the well by an operator standing on the ground. This makes the operation of the valve unit more user-friendly, easier and hence cheaper to operate.

In a fifth aspect, the present invention also relates to a valve unit, where at least the by-pass valves comprise the same operating means.

This makes it possible to use the same dimension of keys for at least all by-pass valves, meaning that one dimension of ring spanner, ratcheting ring spanner or socket is sufficient. The socket is advantageously driven by a crank-shaped handle ideally operated from ground level by an operator. This can save substantial time and effort when there is a lot of turning to be done (many valves), and when there is enough room to swing the handle, easy access to the valve unit, and so on.

By using manual or hand operated actuators, like crank-shaped handle, to open or close the valve, the user has the ability to position the valve as needed or wanted.

This again minimizes the risk for scalding or other risks related to the working environment.

In a sixth aspect, the present invention also relates to a valve unit, where at least the by-pass valve comprises position indicators.

This makes it possible to see from the ground level which position each individual valve has. The indication could be a colored O-ring at the top of the valve head becoming visible when the valve is open to a certain level. Another option is an indicator on the periphery of the moveable valve top, an indicator turning with the actual rotation of the valve.

Further options could be sensors indicating how much the valve has moved in the axial direction.

In a seventh aspect, the present invention also relates to a valve unit, where the by-pass duct comprises at least one outlet for e.g. pressure and temperature gauges.

This makes it possible to add equipment to the valve unit, equipment like pressure or temperature gauges, a combined pressure and temperature gauge or other apparatus or equipment.

Another option is to use the outlet for taking samples.

In an eight aspect, the present invention also relates to a valve unit, where the valve unit is insulated, coated and comprises a valve top cover.

This makes it possible to minimize the loss of energy into the environment.

The valve top cover protects the valve top from liquid passing through the manhole cover on the ground, where the ground often is synonym with a road, and where salt is used at wintertime to deice the roads. Water containing salt dripping and passing through the manhole is a potential risk for the valve unit due to rust, deposition, etc.

In a ninth aspect, the present invention also relates to a method for operating a valve unit, where the method comprises at least the following steps:
- closing at least one main valve,
- opening at least one by-pass valve on the low-pressure side, and
- opening at least one by-pass valve on the high-pressure side.

This makes it possible to lead water or liquid from one side of a main valve to the other side, thus by-passing a closed main valve. This being an advantage having a closed main valve when the pipe at one side of the valve is full and the pipe at the other side is empty. This might be the case where new settlements are coupled to an existing pipeline. By this method it is thus possible to fill the empty pipe slowly and hence without the risk of damages due to shockwaves or sudden pressure.

In a further embodiment, the present invention also relates to a method for operating a valve unit, where the opening of at least one by-pass valve on the low-pressure side comprises the following step:
- dismantle the stem with the seat,
- insert a suction hose, and
- mantle the stem with the seat.

This makes it possible, with a closed main valve, to dismantle the stem with the seat at the side of the main valve, where there is no pressure, and then insert a suction hose emptying the pipeline and mantle the stem with the seat again.

In a tenth aspect, the present invention also relates to the use of a valve unit for installation in a dry well.

This makes it possible to operate a valve unit from outside a dry well by an operator on the ground.

### Description of the Drawing

The invention will be described in further detail below by means of non-limiting embodiments with reference to the drawing, in which:
Fig. 1 shows a side view of a valve unit on a district heating pipeline and in a dry well,
Fig. 2 shows a perspective view of an insulated valve unit with pipelines,
Fig. 3 shows a perspective view of a valve unit with pipelines,
Fig. 4 shows a side view of a valve unit with pipelines,
Fig. 5 shows an end view of a valve unit with pipelines,
Fig. 6 shows a perspective view of a valve top,
Fig. 7 shows a perspective view of a valve top with an outlet device,
Fig. 8 shows a cross-sectional view of the by-pass valve in closed position,
Fig. 9 shows a cross-sectional view of the by-pass valve in open position, and.
Fig. 10 shows a perspective view of a valve unit with by-pass duct.

In the drawing, the following reference numerals have been used for the designations used in the detailed part of the description:
- 1: Valve unit
- 2: District heating pipeline
- 3: Dry well
- 4: Pipe
- 5: Insulation, coating
- 6: Valve top, integrated
- 7: Main valve
- 8: By-pass valve
- 9: Outlet
- 10: By-pass duct
- 11: Outlet device
- 12: Seat
- 13: First opening
- 14: Second opening

### Detailed Description of the Invention

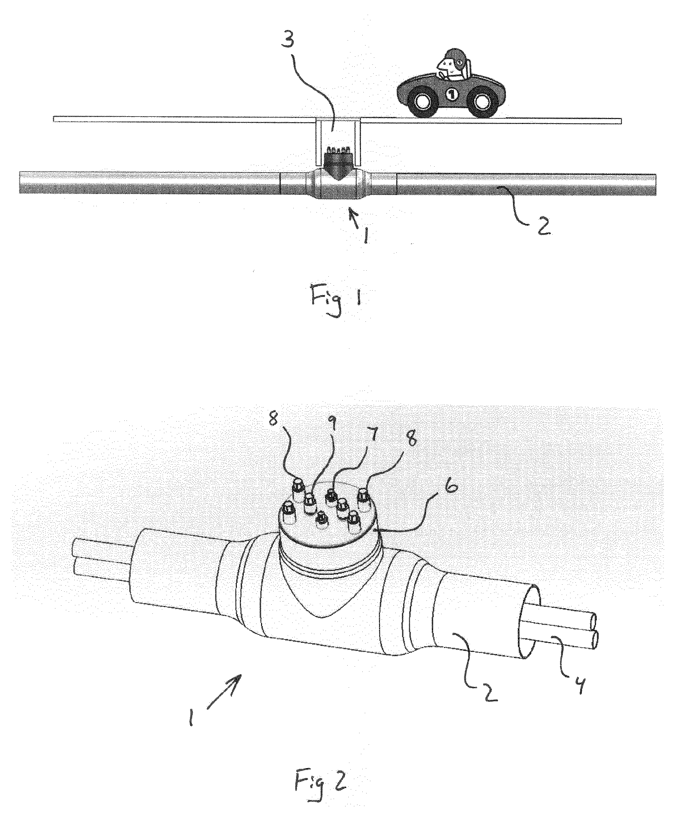

A valve unit for installation on a district heating pipeline and in a dry well according to the invention is shown in figure 1-9.

Figure 1 shows a side view of a valve unit 1 on a district heating pipeline 2 and in a dry well 3. As illustrated on the figure, such pipelines 2 and dry wells 3 are quite often, at least in the cities, placed below a road. A valve unit cover - not shown - is therefore preferably protecting the valve unit against salty dissolutions at wintertime.

Figure 2 shows a perspective view of an insulated valve unit 1 with a pipeline 2, where the pipeline 2 in this example has two pipes 4. Both the valve unit 1 and the pipeline 2 having insulation and coating 5.

The figure further showing the valve unit 1 having an integrated valve top 6 - here shown as an isolated valve top 6 - where the top of two main valves 7, four by-pass valves 8 and two outlets 9 are visible.

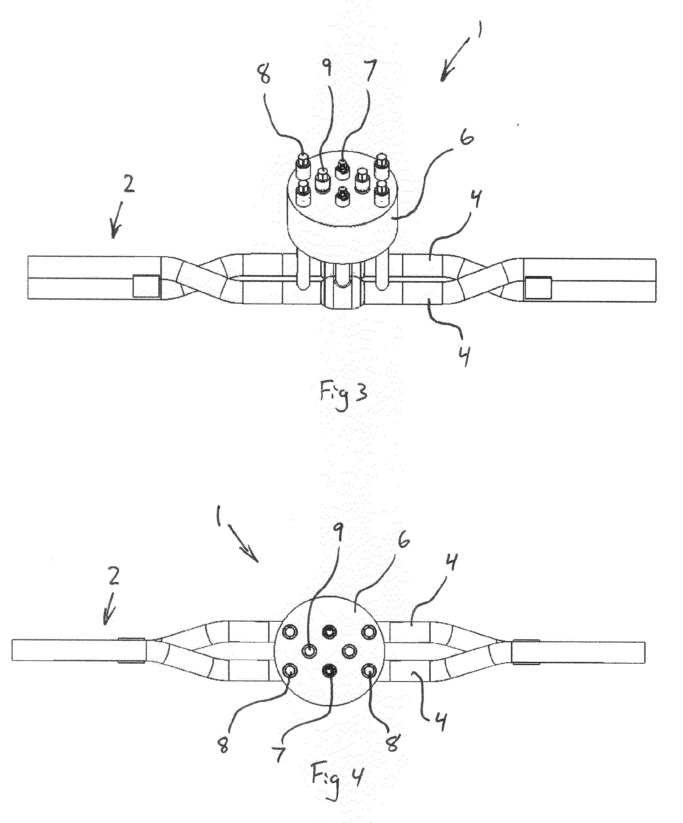

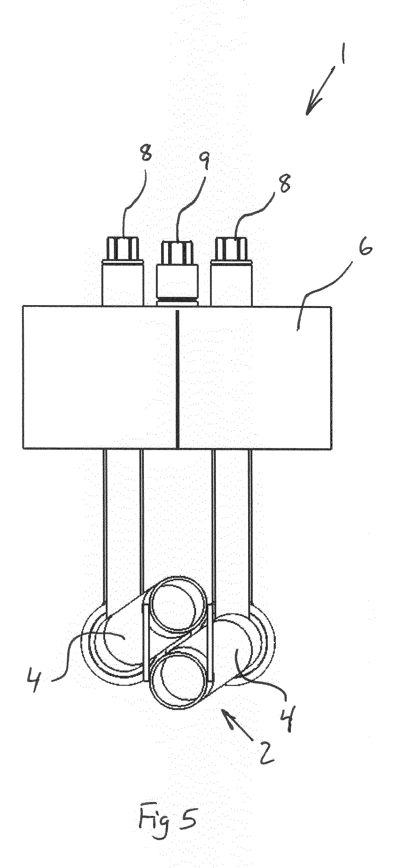

Figure 3 shows a perspective view of a valve unit 1 with pipeline 2, figure 4 shows a side view of a valve unit 1 with pipeline 2, and figure 5 shows an end view of a valve unit 1 with pipes 4 which is the same valve unit 1 with pipeline 2 from different views.

As can be seen, the pipeline 2 has often two individual pipes 4 arranged over and under each other, but on grounds of the valve unit 1 the pipes 4 changes to side by side, where after the pipes 4 again change back into over and under position.

The figures, most obviously figure 3, show a pipe 4 with a main valve 7 and a by-pass valve 8 on either side of the main valve 7.

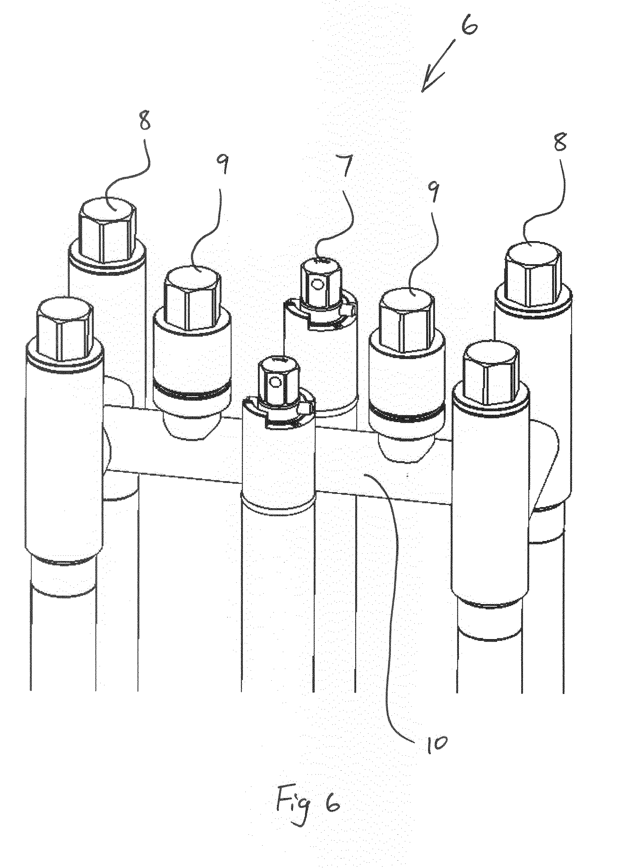

Figure 6 shows a perspective view of a valve top 6, with two main valves 7 and four by-pass valves 8, where the by-pass valves 8 are connected by means of a by-pass duct 10. That means, when opening any two of the by-pass valves 8, one pipe 4 from one side of a main valve 7 connects to one pipe 4 from the other side of the same main valve 7 or to a pipe 4 connected to another main valve 7.

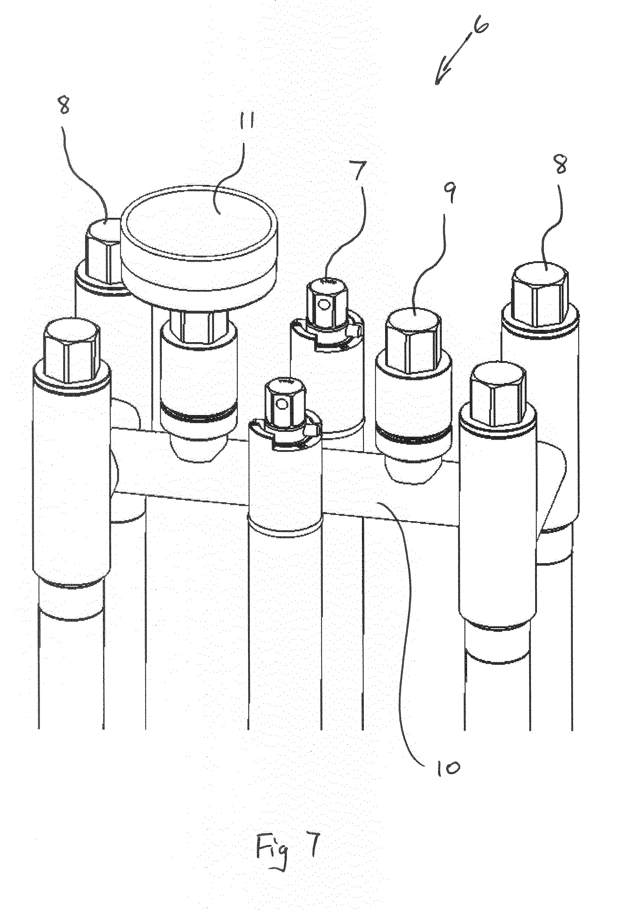

Figure 7 shows a perspective view of a valve top 6 as shown in figure 6, but with an outlet device 11 in terms of e.g. a temperature gauge arranged at one of the two shown outlets 9.

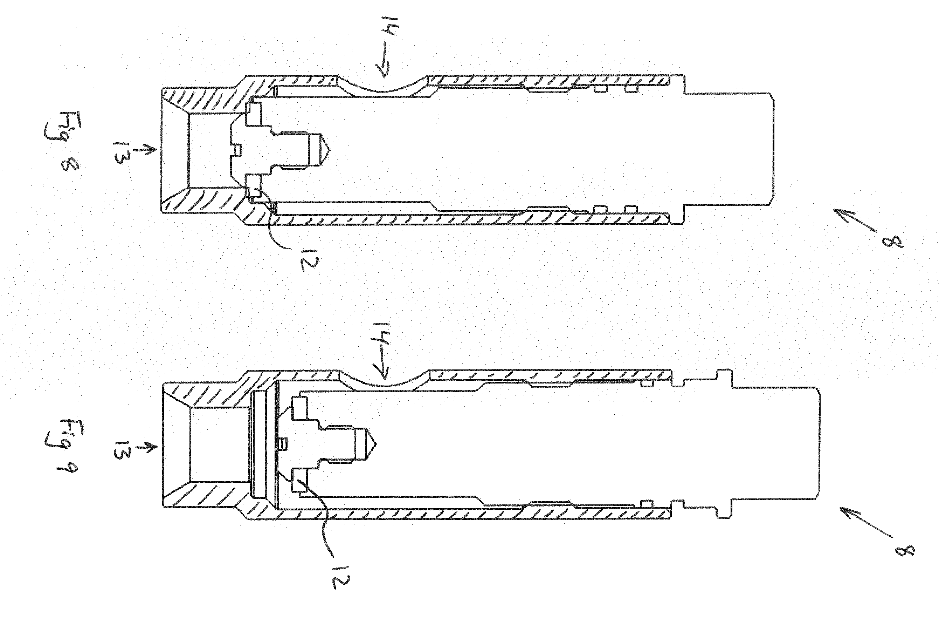

Figure 8 shows a cross-sectional view of a by-pass valve 8 in closed position, and figure 9 shows a cross-sectional view of a by-pass valve 8 in open position. Figure 8 shows a cross-sectional view of a by-pass valve 8 with a seat 12 where the seat 12 is in a closed position, and figure 9 shows a cross-sectional view of a by-pass valve 8 where the seat 12 is in an open position. As the figures show, there are two openings; a first opening 13 and a second opening 14. Which one of the first opening 13 and the second opening 14 is the inlet and which one is the outlet depends on the situation and the pressure in the pipes 4. Therefore, what in one situation is an inlet opening is in another situation an outlet opening.

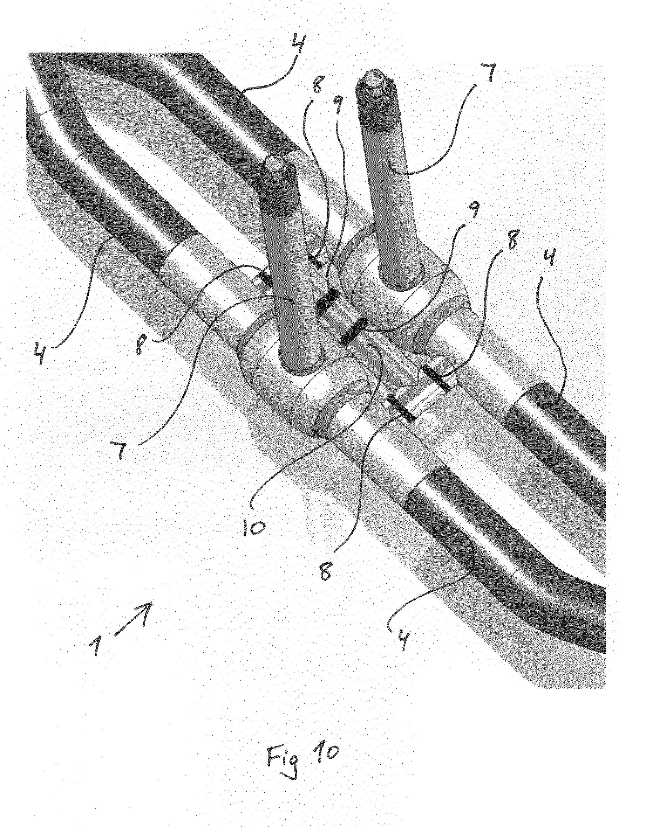

Figure 10 shows a perspective view of a valve unit 1, where a by-pass duct 10 is shown at essentially the same level as the pipes 4. By-pass valves 8 and outlets 9 are indicated for clarity reasons, however they are not shown in details and the shown position of the by-pass valves 8 and outlets 9 are also just options. Depending on the position of the by-pass duct 10, by-pass valves 8 could be of various kinds, like ball valves, seat valves, conical valves, etc.

The purpose of figure 10 is merely to show an alternative embodiment to a by-pass duct 10 arranged at a valve top 6. In fact, the by-pass duct 10 could be placed at all levels from the valve units top to its bottom, as long as the by-pass duct 10 is properly connected via pipe connections to at least one pipe 4.

The shown variants are not limiting to the scope of the invention but are only examples of how the invention can be practiced, as a skilled person in the art will be able to apply the invention in many other ways and in several other variants after reading the present description.

## Claims

1. Valve unit (1) for installation on a district heating pipeline (2) and in a dry well (3), where the valve unit (1) comprises a valve top (6) with at least one main valve (7) and at least one by-pass valve (8), where at least one by-pass duct (10) is at least connected to a pipe (4) on both sides of the main valve (7) via a pipe connection, and where the by-pass duct (10) is further connected to the at least one by-pass valve (8) **characterised in that** the by-pass duct (10) is an integrated part of the valve unit (1).

2. Valve unit (1) according to claim 1 **characterised in that** the by-pass duct (10) is an integrated part of the valve top (6).

3. Valve unit (1) according to any of claims 1 and 2, **characterised in that** the at least one by-pass duct (10) at each pipe connection comprises a separate by-pass valve (8).

4. Valve unit (1) according to any of the claims 1 to 3, **characterised in that** the center axis of at least all by-pass valves (8) are mainly parallel, the valve top (6) of the valves being essentially in the same plane and pointing in the same direction.

5. Valve unit (1) according to any of the claims 1 to 4, **characterised in that** at least the by-pass valves (8) comprise the same operating means.

6. Valve unit (1) according to any of the claims 1 to 5, **characterised in that** at least the by-pass valves (8) comprises position indicators.

7. Valve unit (1) according to any of the claims 1 to 6, **characterised in that** the by-pass duct (10) comprises at least one outlet (9) for e.g. pressure and temperature gauges.

8. Valve unit (1) according to any of the claims 1 to 7, **characterised in that** the valve unit (1) is insulated, coated and comprises a valve top cover.

9. Method for operating a valve unit (1) according to any of the claims 1 to 8, **characterised in that** that the method comprises at least the following steps:
- closing at least one main valve (7),
- opening at least one by-pass valve (8) on the low-pressure side, and
- opening at least one by-pass valve (8) on the high-pressure side.

10. Use of a valve unit (1) according to any of the claims 1 to 8, for installation in a dry well (3).
